# EUROPEAN PATENT SPECIFICATION

(11) **EP 3 388 192 B1**
(45) Date of publication and mention of the grant of the patent: **04.05.2022**
(21) Application number: 18163790.1
(22) Date of filing: 23.03.2018
(51) Int. Cl.: B23Q 11/10

(54) **OPERATING UNIT FOR MACHINE TOOLS, MACHINE TOOL, AND METHOD FOR PROCESSING COMPONENTS**
BEDIENEINHEIT FÜR WERKZEUGMASCHINEN, WERKZEUGMASCHINE UND VERFAHREN ZUM BEARBEITEN VON BAUTEILEN
UNITÉ DE FONCTIONNEMENT POUR MACHINES-OUTILS, MACHINE-OUTIL ET PROCÉDÉ DE TRAITEMENT DE COMPOSANTS

(30) Priority: 24.03.2017 IT 201700032903
(43) Date of publication of application: 17.10.2018
(73) Proprietor: F.O.M. Industrie S.r.l., 47841 Cattolica (IT)
(72) Inventor: LATTANZI, Lorenzo, 61121 PESARO (IT)
(74) Representative: Manconi, Stefano

(56) References cited:
- DE-A1-102012 018 389
- JP-A- H11 285 945
- JP-U- H04 115 555
- US-A1- 2002 146 297

## Description

The present invention relates to an operating unit for machine tools.

The present invention finds advantageous application in the processing of section bars, in particular made of aluminium, light alloys, PVC or the like, to which explicit reference will be made in the description below without because of this loosing in generality.

In the field of section bar processing, in particular when dealing with those made of aluminium, light alloys, PVC or the like, machine tools are known, which comprise an elongated base extending in a first direction; and an overhead crane, which extends above the base in a second direction that is substantially transverse to the first direction, and is movable along the base in the first direction.

Generally speaking, the base supports a plurality of clamping vices, which are designed to receive and hold at least one section bar, and are arranged along the base in the first direction according to a length of the section bars to be processed and/or to the processing to be carried out.

The overhead crane usually supports an operating unit, which is movable along the overhead crane in the second direction, and is provided with at least one electro-spindle, which is movable in a third direction that is orthogonal to the aforesaid first and second directions.

An interchangeable tool is fitted on the electro-spindle so as to carry out a a chipping machining of the section bars.

The operating unit is further provided with a plurality of nozzles, which are mounted around the tool, are oriented towards the tool, and are connected to a source of cooling and/or lubricating fluid of the tool.

The nozzles are manually oriented by operators after every tool replacement operation or are divided into nozzle groups with a fixed orientation associated with respective tools.

Known machine tools of the type described above are affected by some drawbacks mainly due to the fact that, in one case, the manual orientation of the nozzles is relatively imprecise and, every time, requires the machine tool to be stopped and, in the other case, due to the relatively large number of nozzles, the operating unit is relatively complicated and expensive.

JP H11 285945 A discloses an operating unit according to the preamble of claim 1 and a method according to the preamble of claim 12.

The object of the present invention is to provide an operating unit designed to eliminate the aforementioned drawbacks in a straightforward, relatively low-cost manner.

According to the invention, there is provided an operating unit as claimed in claims from 1 to 7.

The present invention further relates to a machine tool for processing components.

According to the present invention, there is provided a machine tool for processing components as claimed in claims from 8 to 11.

Finally, the present invention relates to a method for processing components.

According to the present invention, there is provided a method for processing components as claimed in claim 12.

The present invention will now be described with reference to the accompanying drawings, showing a nonlimiting embodiment thereof, wherein:
figure 1 is a schematic perspective view, with parts removed for greater clarity, of a preferred embodiment of the machine tool according to the invention;
figure 2 is a schematic perspective view, with parts removed for greater clarity, of a detail of the machine tool of figure 1;
figure 3 is a schematic side view, with parts removed for greater clarity, of a first detail of figure 2;
figures 4a and 4b are two schematic perspective views of a second detail of figure 4, which is shown in two different operating positions;
figure 5 schematically shows the operation of the detail of figures 4a and 4b; and
figure 6 is a schematic perspective view, with parts removed for greater clarity, of a variant of the machine tool of figure 1.

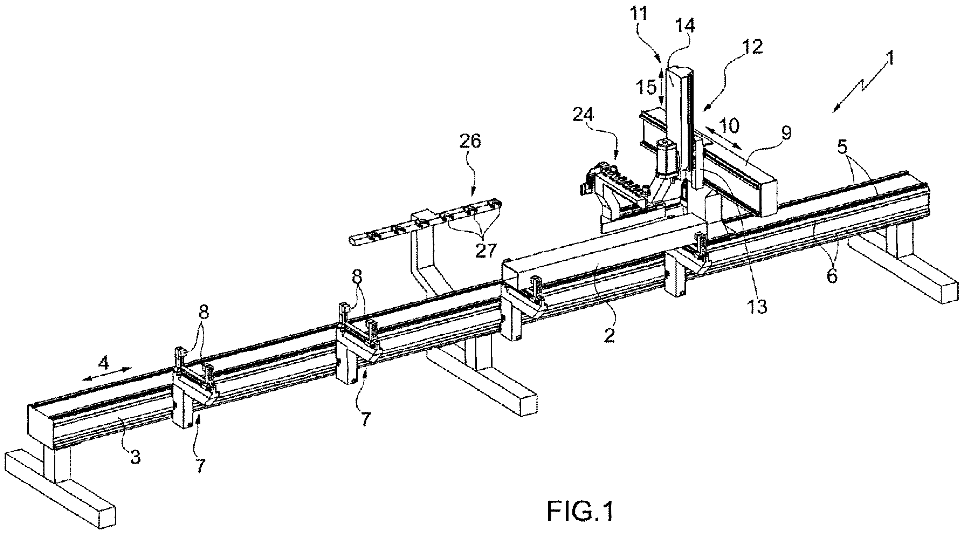

With reference to figure 1, number 1 indicates, as a whole, a machine tool for processing section bars 2, in particular made of aluminium, light alloys, PVC or the like, having an elongated shape.

The machine 1 comprising an elongated base 3, which substantially has the shape of a parallelepiped, extends in a horizontal direction 4, and is provided with two longitudinal guide members 5, 6 parallel to the direction 4, one of them being obtained on the upper face of the base 3 and the other one being obtained on the side face of the base 3.

The machine tool 1 further has a plurality of clamping vices 7, which are coupled to the longitudinal member 6 in a sliding manner, and are distributed along the longitudinal member 6 in the direction 4 according to the sizes of the section bars 2 to be processed and/or to the processing to be carried out.

Each vice 7 comprises two movable jaws 8, which are movable relative to one another between a clamping position of at least one section bar 2 and a release position.

The machine tool 1 is further provided with an overhead crane 9, which extends above the base 3 in a horizontal direction 10 that is transverse to the direction 4, and is coupled to the longitudinal member 5 in a sliding manner so as to make straight movements along the base 3 in the direction 4.

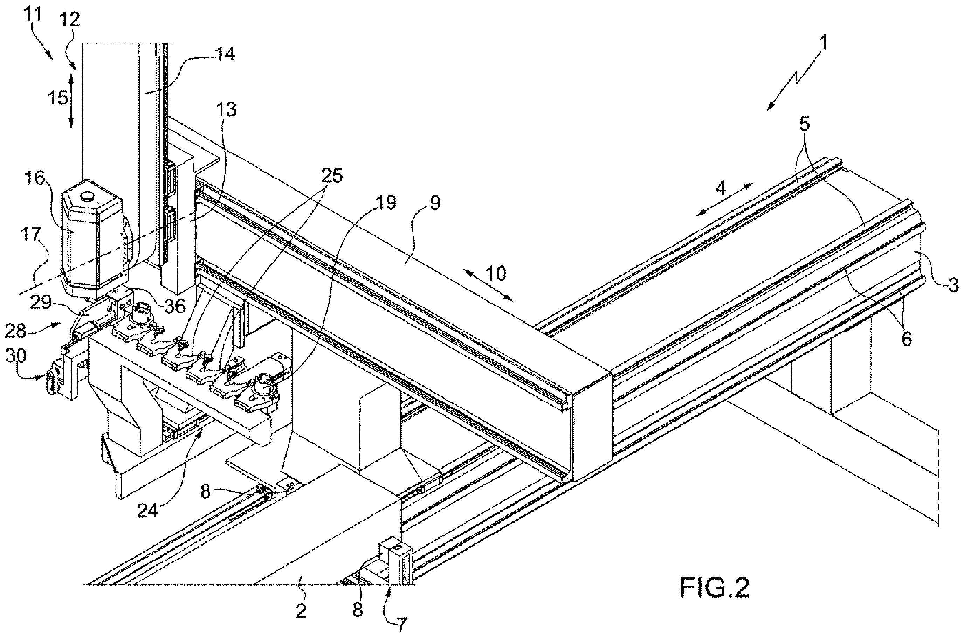

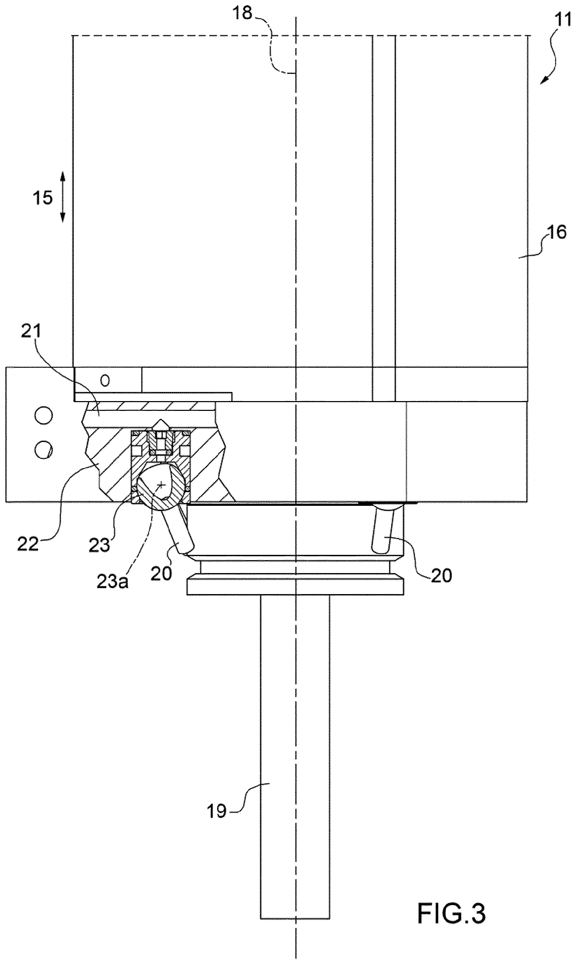

According to figures 2 and 3, the overhead crane 9 supports an operating unit 11 comprising an operating head 12 comprising, in turn, a horizontal slide 13, which is coupled to the overhead crane 9 in a sliding manner so as to make straight movements along the overhead crane 9 in the direction 10; and a vertical slide 14, which is coupled to the slide 13 in a sliding manner so as to make, relative to the slide 13, straight movements in a vertical direction 15, which is orthogonal to the directions 4 and 10.

The slide 14 supports and electro-spindle 16, which is coupled to the slide 14 in a rotary manner so as to rotate, relative to the slide 14, around a rotation axis 17 parallel to the direction 4, and has a longitudinal axis 18, whose orientation depends on the position of the electro-spindle 16 around the axis 17.

On the electro-spindle 16 there is fitted, coaxially to the axis 18, an interchangeable tool 19, which is designed to carry out a chipping machining on the section bars 2, and is cooled and/or lubricated by means of a plurality of cooling and/or lubricating nozzles 20 distributed around the axis 18 and oriented towards the tool 19.

Each nozzle 20 has an elongated tubular shape, and is connected to a source (not shown) of a cooling and/or lubricating fluid by means of a channel 21, which is made through a containing casing 22 of the electro-spindle 16, and has an outlet end coupled to the nozzle 20 by means of a ball joint 23.

According to a variant that is not shown herein, the ball joint 23 is replaced by a flexible duct interposed between the nozzle 20 and the channel 21.

The machine tool 1 is further provided with a first tool store 24, which is mounted on the overhead crane 9 parallel to the direction 10, and has a plurality of seats 25 aligned with one another in the direction 10 to receive and hold respective tools 19.

The machine tool 1 is further provided with a second tool store 26, which is fixed in an intermediate point of the base 3 parallel to the direction 4, and has a plurality of seats 27 aligned with one another in the direction 4 to receive and hold respective tools 19.

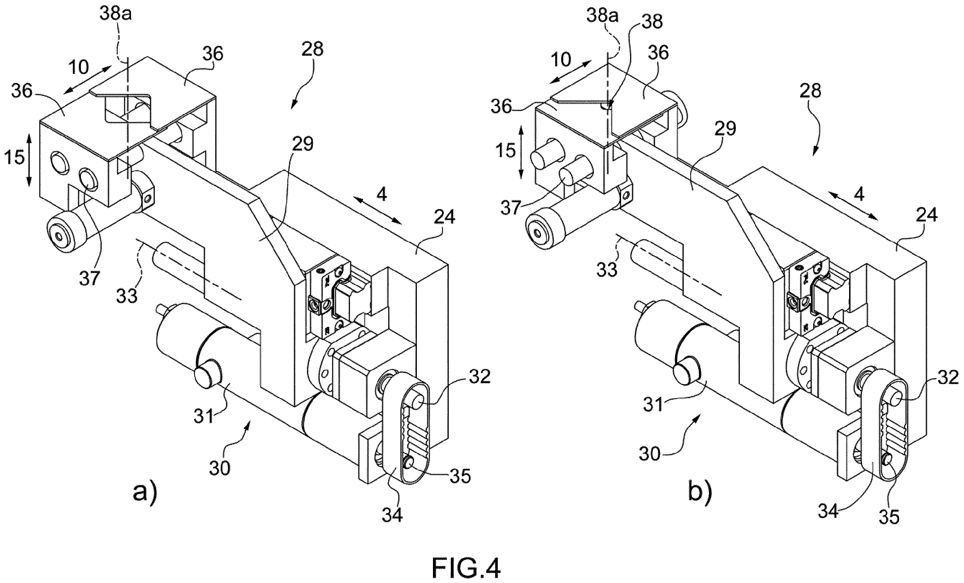

With reference to figures 2 and 4, the tool store 24 supports, in the area of a free end thereof, an orienting device 28 to move each nozzle 20 between at least two operating positions, in which the nozzle 20 has different orientations relative to the tool 19.

The device 28 comprises a horizontal slide 29, which is coupled to the tool store 24 in a sliding manner so as to make, relative to the tool store 24 and due to the thrust of an operating device 30, straight movements in the direction 4.

The device 30 comprises an electric motor 31, which is fixed to the tool store 24 parallel to the direction 4; a screw 32, which is mounted on the tool store 24 so as to rotate around a longitudinal axis 33 of its that is parallel to the direction 4, and is coupled to a slide 29 by means of a screw-nut coupling; and a belt transmission 34 to connect an output shaft 35 of the motor 31 and the screw 32 to one another.

The device 28 further comprises two orienting members 36, each having the shape of a flat fork, facing the other member 36, and being coupled to the slide 29 in a sliding manner so as to move, relative to the slide 29, in the direction 10.

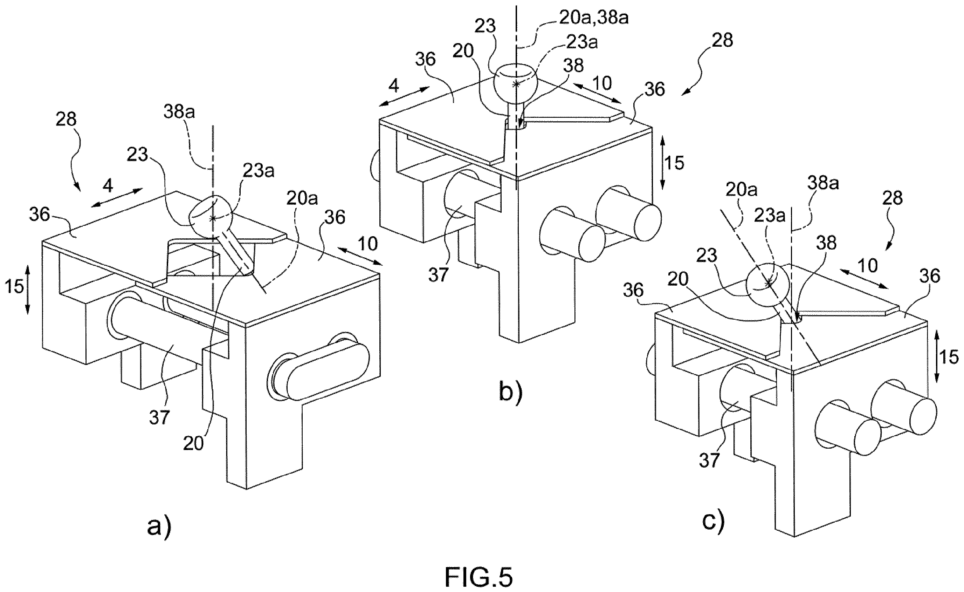

The members 36 are mounted so as to slide one on the other, due to the thrust of an operating device 37, in the direction 10 between an open position (figures 4a and 5a), in which the members 36 allow a nozzle 20 to be inserted into/removed from the device 28, and a closed position (figures 4b and 5b), in which the members 36 define a seat 38 for the nozzle 20.

The operation of the orienting device 28 will now be described with reference to a nozzle 20 and starting from an instant in which:
the electro-spindle 16 is arranged with its longitudinal axis 18 parallel to the direction 15;
a centre 23a of the ball joint 23 is arranged on a longitudinal axis 38a of the seat 38 parallel to the direction 15;
the orienting members 36 are arranged in their open position; and
the nozzle 20 taken into account is inserted between the members 36 (figure 5a).

Following the movement of the members 36 from their open position to their closed position (figure 5b), the nozzle 20 is moved to a neutral reference position, in which a longitudinal axis 20a of the nozzle 20 is parallel to the direction 15 and coincides with the axis 38a.

At this point, the position of the nozzle 20 around the relative centre 23a is selectively controlled combining the movements of the slide 29 and, hence, of the members 36 in the direction 4 with the movements of the electro-spindle 16 in the direction 10.

According to a variant that is not shown herein, the orienting device 28 is further movable, relative to the overhead crane 9, in the direction 10.

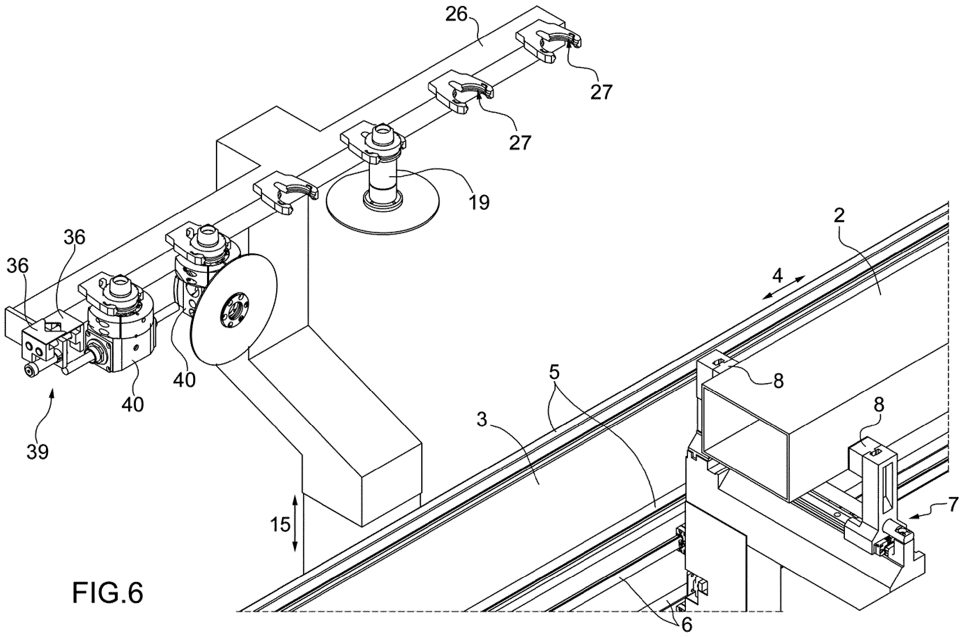

The variant shown in figure 6 differs from the preceding figures only because of the fact that, in it, the orienting device 28 is eliminated and replaced by an orienting device 39, which is mounted on the tool store 26, is completely similar to the orienting device 28, and does not have the slide 29.

In this case, the position of each nozzle 20 around the relative centre 23a is selectively controlled combining the movements of the overhead crane 9 in the direction 4 with the movements of the electro-spindle 16 in the direction 10.

Obviously, both tools 19 and assemblies 40 of the type shown, for example, in figure 6 can be fitted on the electro-spindle 16.

Therefore, the machine tool 1 has some advantages mainly due to the fact that:
each nozzle 20 is oriented in an automatic manner through the orienting device 28 and the movements of the operating head 12 and/or of the orienting device 28 in the direction 4 and 10;
the position of each nozzle 20 around the centre 23a of the relative ball joint 23 is controlled in a relatively simple, quick and precise manner and without having to stop the machine tool 1; and
the number of nozzles 20 mounted on the operating head 12 is relatively small.

According to a further variant that is not shown herein, each nozzle 20 is oriented in an automatic manner through the orienting device 28 combining the movements of the electro-spindle 16 around the axis 17 and/or around a rotation axis that is parallel to the direction 15.

## Claims

1. An operating unit for machine tools, preferably for processing section bars (2), in particular made of aluminium, light alloys, PVC or the like, the operating unit comprising an operating head (12) provided with a tool (19) and with at least one orientable nozzle (20), which can be connected to a source of a cooling and/or lubricating fluid of the tool (19), and is coupled to the operating head (12) so as to move between at least two operating positions, in which the nozzle (20) has different orientations relative to the tool (19); an orienting device (28) to move the nozzle (20) between said operating positions; and actuator means to move the operating head (12) and the orienting device (28) relative to one another so as to move the nozzle (20), at first, in contact with the orienting device (28) and, then, between the operating positions; and being **characterized in that** the orienting device (28) comprises two orienting members (36), which are movable relative to one another between an open position, in which the orienting members (36) allow the nozzle (20) to be inserted into/removed from the orienting device (28), and a closed position, in which the orienting members (36) move the nozzle (20) to a neutral reference position.

2. An operating unit according to claim 1, wherein the operating head (12) is movable in at least two feeding directions (4, 10), which are substantially transverse to one another.

3. An operating unit according to claim 1, wherein the operating head (12) is movable in a first feeding direction (10) and the orienting device (28) is movable in a second feeding direction (4), which is substantially transverse to the first feeding direction (10).

4. An operating unit according to any of the previous claims, wherein the orienting device (28) has a seat (38), which is designed to be engaged by the nozzle (20) in order to be moved to a neutral reference position.

5. An operating unit according to any of the previous claims, wherein each orienting member (36) has the shape of a fork; the orienting members (36) being arranged so as to slide one on the other during the movement between said open and closed positions.

6. An operating unit according to any of the previous claims, wherein the nozzle (20) is coupled to the operating head (12) by means of a ball joint (23).

7. A machine tool for processing components, preferably section bars (2), in particular made of aluminium, light alloys, PVC or the like, the machine tool comprising clamping means (7) to hold at least one component; and an operating unit (11) according to any of the claims from 1 to 6.

8. A machine tool according to claim 7 and comprising, furthermore, an elongated base (3) extending in a first direction (4); the orienting device (28) being fixed to the base (3) at least in the first direction (4).

9. A machine tool according to claim 8 and comprising, furthermore, an overhead crane (9), which extends above the base (3) in a second direction (10) that is substantially transverse to the first direction (4), and is movable along the base (3) in the first direction (4); the operating head (12) being movable along the overhead crane (9) in the second direction (10).

10. A machine tool according to claim 7 and comprising, furthermore, an elongated base (3) extending in a first direction (4), and an overhead crane (9), which extends above the base (3) in a second direction (10) that is substantially transverse to the first direction (4), and is movable along the base (3) in the first direction (4); the operating head (12) being movable along the overhead crane (9) in the second direction (10).

11. A machine tool according to claim 10, wherein the orienting device (28) is mounted on the overhead crane (9), and is movable at least in the first direction (4) relative to the overhead crane (9).

12. A method for processing components, preferably section bars (2), in particular made of aluminium, light alloys, PVC or the like, in a machine tool comprising clamping means (7) to hold at least one component, and an operating head (12) provided with a tool (19) and with at least one orientable nozzle (20), which can be connected to a source of a cooling and/or lubricating fluid of the tool (19), and is coupled to the operating head (12) so as to move between at least two operating positions, in which the nozzle (20) has different orientations relative to the tool (19); the method comprising the steps of:
moving the nozzle (20) between said operating positions by means of an orienting device (28);
moving the operating head (12) and the orienting device (28) relative to one another so as to move the nozzle (20), at first, in contact with the orienting device (28) and, then, between said operating positions;
moving the operating head (12) and the orienting device (28) relative to one another so as to move the nozzle (20), at first, from one of the two operating positions to a neutral reference position and, then, from the neutral reference position to the other operating position;
and being **characterized in that** it comprises, furthermore, the steps of:
inserting the nozzle (20) between two orienting members (36) of the orienting device (28); and
moving the two orienting members (36) towards one another so as to move the nozzle (20) to said neutral reference position.

## Patentansprüche

1. Arbeits- bzw. Betriebseinheit für Werkzeugmaschinen, vorzugsweise zum Bearbeiten von Profilstangen (2), insbesondere aus Aluminium, Leichtmetalllegierungen, PVC oder dergleichen, wobei die Arbeitseinheit umfasst: einen Arbeitskopf (12), der mit einem Werkzeug (19) und mit zumindest einer ausrichtbaren Düse (20) versehen ist, die mit einer Kühl- und/oder Schmierflüssigkeitsquelle des Werkzeugs (19) verbunden werden kann und mit dem Arbeitskopf (12) gekoppelt ist, um sich zwischen zumindest zwei Betriebsstellungen zu bewegen, in denen die Düse (20) unterschiedliche Ausrichtungen relativ zu dem Werkzeug (19) aufweist; eine Ausrichtungsvorrichtung (28), um die Düse (20) zwischen den Betriebspositionen zu bewegen; und Betätigungsmittel, um den Arbeitskopf (12) und die Ausrichtungsvorrichtung (28) relativ zueinander zu bewegen, um die Düse (20) zuerst in Kontakt mit der Ausrichtungsvorrichtung (28) und dann zwischen den Betriebspositionen zu bewegen; und **dadurch gekennzeichnet, dass** die Ausrichtungsvorrichtung (28) zwei Ausrichtungsglieder (36) umfasst, die relativ zueinander zwischen einer offenen Position, in der die Ausrichtungsglieder (36) ermöglichen, dass die Düse (20) in die Ausrichtungsvorrichtung (28) eingesetzt/aus dieser entfernt wird, und einer geschlossenen Position bewegbar sind, in der die Ausrichtungsglieder (36) die Düse (20) in eine neutrale Referenzposition bewegen.

2. Arbeitseinheit nach Anspruch 1, wobei der Arbeitskopf (12) in zumindest zwei Zuführrichtungen (4, 10) bewegbar ist, die im Wesentlichen quer zueinander sind.

3. Arbeitseinheit nach Anspruch 1, wobei der Arbeitskopf (12) in einer erste Zuführrichtung (10) bewegbar ist und die Ausrichtungsvorrichtung (28) in einer zweiten Zuführrichtung (4) bewegbar ist, die im Wesentlichen quer zu der ersten Zuführrichtung (10) ist.

4. Arbeitseinheit nach einem der vorhergehenden Ansprüche, wobei die Ausrichtungsvorrichtung (28) einen Sitz (38) aufweist, der ausgelegt ist, mit der Düse (20) in Eingriff gebracht zu werden, um in eine neutrale Referenzposition bewegt zu werden.

5. Arbeitseinheit nach einem der vorangehenden Ansprüche, wobei jedes Ausrichtungsglied (36) die Form einer Gabel aufweist; wobei die Ausrichtungsglieder (36) so angeordnet sind, dass sie während der Bewegung zwischen der offenen und der geschlossenen Position aufeinander gleiten.

6. Arbeitseinheit nach einem der vorangehenden Ansprüche, wobei die Düse (20) mit dem Arbeitskopf (12) mittels eines Kugelgelenks (23) gekoppelt ist.

7. Werkzeugmaschine zum Bearbeiten von Bauteilen, vorzugsweise Profilstangen (2), insbesondere aus Aluminium, Leichtmetalllegierungen, PVC oder dergleichen, wobei die Werkzeugmaschine Klemmmittel (7) zum Halten zumindest eines Bauteils; und eine Arbeitseinheit (11) nach einem der Ansprüche 1 bis 6 umfasst.

8. Werkzeugmaschine nach Anspruch 7 und ferner umfassend eine längliche Basis (3), die sich in einer ersten Richtung (4) erstreckt; wobei die Ausrichtungsvorrichtung (28) zumindest in der ersten Richtung (4) an der Basis (3) befestigt ist.

9. Werkzeugmaschine nach Anspruch 8 und ferner umfassend einen Brückenkran (9), der sich über der Basis (3) in einer zweiten Richtung (10) erstreckt, die im Wesentlichen quer zu der ersten Richtung (4) ist, und entlang der Basis (3) in der ersten Richtung (4) bewegbar ist; wobei der Arbeitskopf (12) entlang dem Brückenkran (9) in der zweiten Richtung (10) bewegbar ist.

10. Werkzeugmaschine nach Anspruch 7 und ferner umfassend eine längliche Basis (3), die sich in einer ersten Richtung (4) erstreckt, und einen Brückenkran (9), der sich über der Basis (3) in einer zweiten Richtung erstreckt (10), die im Wesentlichen quer zu der ersten Richtung (4) ist, und entlang der Basis (3) in der ersten Richtung (4) bewegbar ist; wobei der Arbeitskopf (12) entlang dem Brückenkran (9) in der zweiten Richtung (10) bewegbar ist.

11. Werkzeugmaschine nach Anspruch 10, wobei die Ausrichtvorrichtung (28) an dem Brückenkran (9) montiert ist und zumindest in der ersten Richtung (4) relativ zu dem Brückenkran (9) bewegbar ist.

12. Verfahren zum Bearbeiten von Bauteilen, vorzugsweise Profilstangen (2), insbesondere aus Aluminium, Leichtmetalllegierungen, PVC oder dergleichen, in einer Werkzeugmaschine, die Klemmmittel (7) zum Halten zumindest eines Bauteils und einen Arbeitskopf (12) umfasst, der mit einem Werkzeug (19) und mit zumindest einer ausrichtbaren Düse (20) versehen ist, die mit einer Kühl- und/oder Schmierflüssigkeitsquelle des Werkzeugs (19) verbunden werden kann und mit dem Arbeitskopf (12) gekoppelt ist, um sich zwischen zumindest zwei Betriebspositionen zu bewegen, in denen die Düse (20) unterschiedliche Ausrichtungen relativ zu dem Werkzeug (19) aufweist; wobei das Verfahren die Schritte umfasst:
Bewegen der Düse (20) zwischen den Betriebspositionen mittels einer Ausrichtungsvorrichtung (28);
Bewegen des Arbeitskopfes (12) und der Ausrichtungsvorrichtung (28) relativ zueinander, um die Düse (20) zuerst in Kontakt mit der Ausrichtungsvorrichtung (28) und dann zwischen den Betriebspositionen zu bewegen;
Bewegen des Arbeitskopfes (12) und der Ausrichtungsvorrichtung (28) relativ zueinander, um die Düse (20) zuerst von einer der zwei Arbeitspositionen zu einer neutralen Referenzposition und dann von der neutralen Referenzposition zu der anderen Betriebsposition zu bewegen;
und **dadurch gekennzeichnet, dass** es ferner die Schritte umfasst:
Einsetzen der Düse (20) zwischen zwei Ausrichtungsgliedern (36) der Ausrichtungsvorrichtung (28); und
Bewegen der beiden Ausrichtungsglieder (36) zueinander hin, um die Düse (20) in die neutrale Referenzposition zu bewegen.

## Revendications

1. Unité de fonctionnement pour machines-outils, de préférence pour traiter des profilés (2), en particulier réalisés à partir d'aluminium, d'alliages légers, de PVC ou similaires, l'unité de fonctionnement comprenant une tête de fonctionnement (12) prévue avec un outil (19) et avec au moins une buse orientable (20) qui peut être raccordée à une source d'un fluide de refroidissement et/ou de lubrification de l'outil (19), et est couplée à la tête de fonctionnement (12) afin de se déplacer entre au moins deux positions de fonctionnement, dans lesquelles la buse (20) a des orientations différentes par rapport à l'outil (19) ; un dispositif d'orientation (28) pour déplacer la buse (20) entre lesdites positions de fonctionnement ; et des moyens d'actionneur pour déplacer la tête de fonctionnement (12) et le dispositif d'orientation (28) l'un par rapport à l'autre afin de déplacer la buse (20), dans un premier temps, en contact avec le dispositif d'orientation (28), et ensuite, entre les positions de fonctionnement ; et étant **caractérisée en ce que** le dispositif d'orientation (28) comprend deux éléments d'orientation (36) qui sont mobiles l'un par rapport à l'autre entre une position ouverte, dans laquelle les éléments d'orientation (36) permettent à la buse (20) d'être insérée dans/retirée du dispositif d'orientation (28), et une position fermée, dans laquelle les éléments d'orientation (36) déplacent la buse (20) dans une position de référence neutre.

2. Unité de fonctionnement selon la revendication 1, dans laquelle la tête de fonctionnement (12) est mobile dans au moins deux directions d'alimentation (4, 10), qui sont sensiblement transversales l'une par rapport à l'autre.

3. Unité de fonctionnement selon la revendication 1, dans laquelle la tête de fonctionnement (12) est mobile dans une première direction d'alimentation (10) et le dispositif d'orientation (28) est mobile dans une seconde direction d'alimentation (4) qui est sensiblement transversale par rapport à la première direction d'alimentation (10).

4. Unité de fonctionnement selon l'une quelconque des revendications précédentes, dans laquelle le dispositif d'orientation (28) a un siège (38) qui est conçu pour être mis en prise par la buse (20), afin d'être déplacé dans une position de référence neutre.

5. Unité de fonctionnement selon l'une quelconque des revendications précédentes, dans laquelle chaque élément d'orientation (36) a la forme d'une fourchette ; les éléments d'orientation (36) étant agencés afin de glisser les uns sur les autres pendant le mouvement entre lesdites positions ouverte et fermée.

6. Unité de fonctionnement selon l'une quelconque des revendications précédentes, dans laquelle la buse (20) est couplée à la tête de fonctionnement (12) au moyen d'un joint sphérique (23).

7. Machine-outil pour traiter des composants, de préférence des profilés (2), en particulier réalisés à partir d'aluminium, d'alliages légers, de PVC ou similaires, la machine-outil comprenant des moyens de serrage (7) pour maintenir au moins un composant ; et une tête de fonctionnement (11) selon l'une quelconque des revendications 1 à 6.

8. Machine-outil selon la revendication 7 et comprenant, en outre, une base allongée (3) s'étendant dans une première direction (4) ; le dispositif d'orientation (28) étant fixé à la base (3) au moins dans la première direction (4).

9. Machine-outil selon la revendication 8 et comprenant, en outre, un pont roulant (9) qui s'étend au-dessus de la base (3) dans une seconde direction (10) qui est sensiblement transversale à la première direction (4), et est mobile le long de la base (3) dans la première direction (4) ; la tête de fonctionnement (12) étant mobile le long du pont roulant (9) dans la seconde direction (10).

10. Machine-outil selon la revendication 7 et comprenant, en outre, une base allongée (3) s'étendant dans une première direction (4) et un pont roulant (9) qui s'étend au-dessus de la base (3) dans une seconde direction (10) qui est sensiblement transversale à la première direction (4) et est mobile le long de la base (3) dans la première direction (4) ; la tête de fonctionnement (12) étant mobile le long du pont roulant (9) dans la seconde direction (10).

11. Machine-outil selon la revendication 10, dans laquelle le dispositif d'orientation (28) est monté sur le pont roulant (9), et est mobile au moins dans la première direction (4) par rapport au pont roulant (9).

12. Procédé pour traiter des composants, de préférence des profilés (2), en particulier réalisés à partir d'aluminium, d'alliages légers, de PVC ou similaires, dans une machine-outil comprenant des moyens de serrage (7) pour maintenir au moins un composant, et une tête de fonctionnement (12) prévue avec un outil (19) et avec au moins une buse orientable (20) qui peut être raccordée à une source d'un fluide de refroidissement et/ou de lubrification de l'outil (19), et est couplée à la tête de fonctionnement (12) afin de se déplacer entre au moins deux positions de fonctionnement, dans lesquelles la buse (20) a des orientations différentes par rapport à l'outil (19) ; le procédé comprenant les étapes suivantes :
déplacer la buse (20) entre lesdites positions de fonctionnement au moyen d'un dispositif d'orientation (28) ;
déplacer la tête de fonctionnement (12) et le dispositif d'orientation (28) l'un par rapport à l'autre pour déplacer la buse (20), dans un premier temps, en contact avec le dispositif d'orientation (28) et ensuite entre lesdites positions de fonctionnement ;
déplacer la tête de fonctionnement (12) et le dispositif d'orientation (28) l'un par rapport à l'autre afin de déplacer la buse (20), dans un premier temps, de l'une des deux positions de fonctionnement jusqu'à une position de référence neutre et ensuite, de la position de référence neutre à l'autre position de fonctionnement ;
et étant **caractérisé en ce qu'**il comprend, en outre, les étapes suivantes :
insérer la buse (20) entre deux éléments d'orientation (36) du dispositif d'orientation (28) ; et
déplacer les deux éléments d'orientation (36) l'un vers l'autre afin de déplacer la buse (20) dans ladite position de référence neutre.
